# EUROPÄISCHE PATENTSCHRIFT

(11) **EP 2 285 628 B1**
(45) Veröffentlichungstag und Bekanntmachung des Hinweises auf die Patenterteilung: **28.12.2011**
(21) Anmeldenummer: 09765509.6
(22) Anmeldetag: 26.05.2009
(51) Int. Cl.: B60R 22/46

(54) **GURTSTRAFFER MIT EINEM METALLBAND ZUR KRAFTÜBERTRAGUNG**
SEAT BELT TENSIONER HAVING A METAL BAND FOR FORCE TRANSMISSION
TENDEUR DE CEINTURE MUNI D UNE BANDE MÉTALLIQUE POUR LA TRANSMISSION DES FORCES

(30) Priorität: 26.05.2008 DE 102008025094
(43) Veröffentlichungstag der Anmeldung: 23.02.2011
(73) Patentinhaber: Autoliv Development AB, 447 83 Vårgårda (SE)
(72) Erfinder: LARSSON, Linus Karl Axel, S-53431 Vara (SE); RYDSMO, Erik Arthur, S-466 95 Sollebrunn (SE)
(74) Vertreter: Müller, Karl-Ernst
(86) Internationale Anmeldenummer: PCT/EP2009/003713
(87) Internationale Veröffentlichungsnummer: WO 2009/152929

(56) Entgegenhaltungen:
- WO-A-01/56844
- US-A1- 2006 097 506

## Beschreibung

Die Erfindung betrifft einen Gurtstraffer für Kraftfahrzeuge mit einer in einem Gehäuse drehbar gelagerten Gurtwelle als Träger eines darauf gewickelten Gurtbandes und mit einem daran über ein Metallband gekoppelten Strafferantrieb, der bei Auslösung durch Einwirkung auf das Metallband und dessen Bewegung die Gurtwelle antreibt und in Drehung versetzt, wobei das Metallband vor Auslösung des Strafferantriebs in wenigstens einer als Wickelvorrat für dessen Bewegung dienenden Windung um den auf seinem Umfang mit reibungserhöhenden Gestaltungen versehenen Fortsatz der Gurtwelle geschlungen ist.

Ein Gurtstraffer mit den vorgenannten Merkmalen ist aus der gattungsgemässen WO 01156844 A1 bekannt. Der einen linear beweglichen Kolben aufweisende Strafferantrieb ist exzentrisch und mit Abstand zur Gurtwelle des Gurtaufrollers angeordnet. Als Übertragungsmittel für die lineare Bewegung des Kolbens in eine Drehbewegung der Gurtwelle ist ein Metallband quer über den Bewegungsweg des Kolbens geführt und mit einem Ende fest an einem Gehäuseteil angeschlagen, während das andere, lose Ende des Metallbandes in mehreren Windungen um einen Fortsatz der Gurtwelle geschlungen ist und somit einen Wickelvorrat für den Abzug des Metallbandes von dem Wellenfortsatz ausbildet. Zwischen dem auf einem Teilumfang mit einer reibungserhöhenden Riffelung versehenen Wellenfortsatz und dem Wickelvorrat an Metallband sind zwei im Abstand zu dem Wellenfortsatz gehaltene und von dem Wickelvorrat außen umschlungene Kupplungsglieder angeordnet. Wird der pyrotechnisch ausgebildete Strafferantrieb ausgelöst, treiben die entstehenden Gase den Kolben an, der dabei das quer über seinen Bewegungsweg geführte Metallband beaufschlagt und somit eine Zugbewegung auf den Wickelvorrat an Metallband einleitet. Diese Zugbewegung führt dazu, dass zunächst die die Kupplungsglieder außen umschlingenden Windungen des Metallbandes sich zusammenziehen und so die Kupplungsglieder in Eingriff mit dem Wellenfortsatz bringen. Bei der weiteren Bewegung des Kolbens wird das Metallband von den Kupplungsgliedern abgewickelt, so dass die Kupplungsglieder und damit die Gurtwelle in Drehung versetzt sind.

Bei dem bekannten Gurtstraffer erfordert die Anordnung der Kupplungsglieder einen vermehrten Herstellungs- und Montageaufwand für den Gurtstraffer. Es kommt hinzu, dass das Metallband des Wickelvorrats auf der glatten, äußeren Oberfläche der Kupplungsglieder aufliegt, so dass bei der Übertragung der Abzugsbewegung des Metallbandes von den Kupplungsgliedern ein Schlupf entstehen kann, der die auf die Gurtwelle ausgeübte Straffleistung mindert.

Weiterhin ist aus der US 2006/0097506 A1 ein Gurtstraffer mit einem ähnlichen Aufbau bekannt, bei welchem das lose Ende des Metallbandes in einer Teilumschlingung über einen Fortsatz der Gurtwelle geführt und von hier aus als Vorrat für die Bewegung des Metallbandes beim Wirksamwerden des Strafferantriebes in einem linearen Verlauf weitergeführt ist. Zur Verbindung des nur über einen Teilbereich seines Umfangs mit dem Metallband verbundenen Wellenfortsatzes während des Straffvorganges weist der Wellenfortsatz radial abstehende Stifte auf, die in eine in dem Metallband entsprechend angeordnete Lochung eingreifen. Bei diesem Gurtstraffer ist nachteilig, dass wegen des mit einem linearen Verlauf untergebrachten Seilvorrats ein entsprechend großer Platzbedarf für den Gurtstraffer erforderlich ist, der bei dem aus der WO 01/56844 A1 bekannten Gurtstraffer bereits vermieden ist.

Der Erfindung liegt die Aufgabe zugrunde, einen Gurtstraffer mit den eingangs genannten, gattungsgemäßen Merkmalen in seiner Bauweise zu vereinfachen und sicherzustellen, dass die Übertragung der Abzugsbewegung des Metallbandes von dem Wickelvorrat in die Drehbewegung der Gurtwelle verbessert ist.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass sich aufgrund der bei Auslösung des Strafferantriebs eintretenden Zugbelastung die Windungen des Wickelvorrats an Metallband eng um den Fortsatz der Gurtwelle legen und zur Ankopplung des Metallbandes an den Fortsatz zu dessen Drehung der im Inneren des Wickelvorrats gelegene und bei Auslösung des Strafferantriebs in Kontakt mit der Gurtwelle kommende Endabschnitt des Metallbandes mit den an dem Fortsatz ausgebildeten Gestaltungen in Eingriff gelangenden Gestaltungen versehen ist.

Mit der Erfindung ist der Vorteil verbunden, dass einerseits das Metallband nun unmittelbar auf dem Wellenfortsatz aufliegt, so dass auf zwischengeschaltete Kupplungsbauteile verzichtet ist. Gleichzeitig ist durch die Anbringung von mit den bereits bekannten reibungserhöhenden Gestaltungen am Wellenfortsatz zusammenwirkenden Gestaltungen an dem auf dem Wellenfortsatz aufliegenden Ende des Metallbandes dafür Sorge getragen, dass sich eine schlupffreie Übertragung der Abzugsbewegung des Metallbandes in eine Drehbewegung der Gurtwelle ergibt.

In einer ersten Ausführungsform der Erfindung kann vorgesehen sein, dass der Fortsatz der Gurtwelle auf wenigstens einem Teil seines Umfangs mit stiftartigen Vorsprüngen versehen ist, denen in den Endabschnitt des Metallbandes eingebrachte Ausnehmungen zugeordnet sind. In einer Weiterbildung dieses Ausführungsbeispiels kann vorgesehen sein, dass die Ausnehmungen in einem an das Ende des Metallbandes anschließenden Bereich der Erstreckung des Endabschnitts ausgebildet und in einem daran anschließenden Bereich des Endabschnitts mit in Richtung des umschlungenen Fortsatzes der Gurtwelle aus der Oberfläche des Metallbandes herausgehobenen Erhebungen versehen ist. Soweit nur über einen Teilbereich des den Fortsatz der Gurtwelle umschlingenden Endabschnitts des Metallbandes Ausnehmungen eingebracht sind, ist eine zu große Schwächung des Metallbandes damit vermieden. Soweit in einem daran anschließenden Bereich aus der Oberfläche des Metallbandes herausgehobene Erhebungen vorgesehen sind, verhaken sich diese ebenfalls an dem Profil des Fortsatzes, wobei durch die Erhebungen die Festigkeit des Metallbandes gewahrt ist.

Gemäß einer alternativen Ausführungsform der Erfindung kann vorgesehen sein, dass der Fortsatz der Gurtwelle über seinen Umfang mit einer quer zur Umschlingungsrichtung des Metallbandes verlaufenden, aus einseitigen Aufwerfungen bestehenden Riffelung versehen ist und der Endabschnitt des Metallbandes mit in Richtung des umschlungenen Fortsatzes der Gurtwelle aus der Oberfläche des Metallbandes herausgehobenen Erhebungen versehen ist. Bei dieser Ausführungsform stellen die Riffelung des Fortsatzes und die darin sich verhakenden Erhebungen des Metallbandes eine ausreichend feste Verbindung zwischen Metallband und Gurtwellenfortsatz her.

Auch bei diesem Ausführungsbeispiel können aber in einem vorderen Teilbereich des Gurtbandes Ausnehmungen vorgesehen sein, die mit in Richtung des umschlungenen Endabschnitts hervorstehenden Umfangsrändern ausgebildet sind, die dann ebenfalls in die am Wellenfortsatz ausgebildete Riffelung eingreifen und sich darin verhaken.

Im Hinblick auf eine weitere Verbesserung der Formschlussverbindung zwischen dem geriffelten Wellenfortsatz und dem mit Erhebungen versehenen Metallband kann nach einem Ausführungsbeispiel der Erfindung vorgesehen sein, dass die aus der Oberfläche des Metallbandes herausgehobenen Erhebungen mit einer in die Drehrichtung des Wickelvorrats bei Auslösung des Strafferantriebs geneigten Ausstellung ausgebildet sind.

Wie an sich aus der US 2006/0097506 A1 bekannt, ist nach einem Ausführungsbeispiel der Erfindung der Strafferantrieb als Linearstraffer mit einem linear beweglichen und auf das Metallband einwirkenden Kolben ausgebildet, wobei vorgesehen sein kann, dass das von dem Wickelvorrat an Metallband wegführende freie Ende des Metallbandes durch den Bewegungsweg des Kolbens geführt und an einem gehäusefesten Teil befestigt ist.

In der Zeichnung sind Ausführungsbeispiele der Erfindung wiedergegeben, welche nachstehend beschrieben sind. Es zeigen:
- Fig. 1: einen Gurtstraffer in einer schematisierten, teilweise geschnittenen Seitenansicht vor Auslösung des Strafferantriebs,
- Fig. 2: den Gegenstand der Figur 1 nach Auslösung des Strafferantriebes während des Straffvorganges,
- Fig. 3: eine alternative Ausführungsform für ein Halteelement für den Wickelvorrat in einer Einzeldarstellung,
- Fig. 4: den Fortsatz einer Gurtwelle mit zugeordnetem Wickelvorrat in einer auseinander gezogenen Darstellung,
- Fig. 5: den Gegenstand der Figur 4 in einer anderen Ausführungsform,
- Fig. 6: die in dem Metallband ausgebildeten Erhebungen in einer vergrößerten Darstellung.

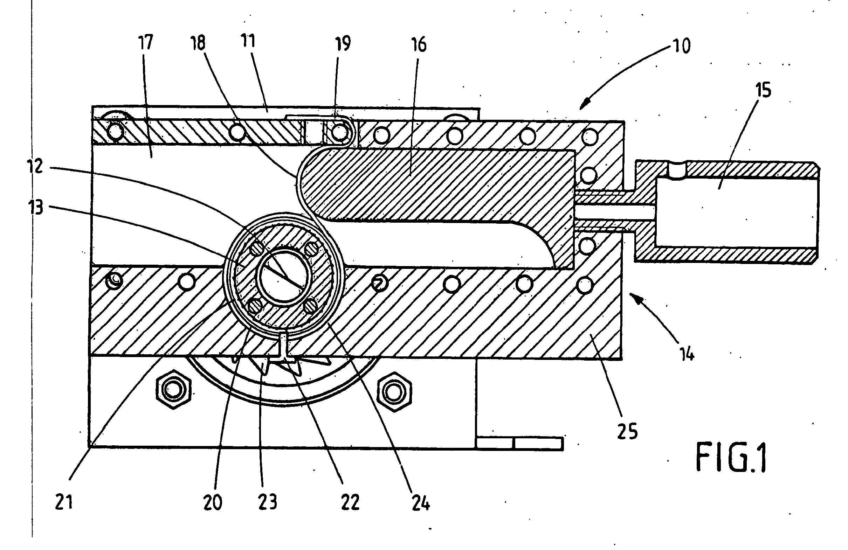

Der in Figur 1 schematisch dargestellte Gurtstraffer 10 weist ein Gehäuse 11 auf, in welchem in einer an sich bekannten Weise eine Gurtwelle 12 drehbar gelagert ist, auf der ein Sicherheitsgurt aufgewickelt ist. Der Aufbau eines derartigen Gurtaufrollers als Teil eines Gurtstraffers ist im Stand der Technik in vielfachen Ausführungsformen bekannt. Dabei ist in der Zeichnung eine in dem Gehäuse 11 ausgebildete Verzahnung 23 zu erkennen, die Bestandteil eines an sich bekannten Blockiersystems für die Gurtwelle 12 ist, welches aber nicht Gegenstand der vorliegen den Erfindung ist.

Seitlich an dem Gehäuse 11 ist ein Strafferantrieb 14 mit einem Straffergehäuse 25 angeordnet, der eine pyrotechnische Treibladung 15 und einen in einem in dem Straffergehäuse 25 ausgebildeten Kolbenraum 17 beweglichen Kolben 16 aufweist. Die Gurtwelle 12 ragt mit einem Fortsatz 13 in die Ebene des Straffergehäuses 25 derart hinein, dass der Fortsatz 13 der Gurtwelle 12 exzentrisch und mit Abstand zum Bewegungsweg des Kolbens 16 in dem Kolbenraum 17 angeordnet ist.

Zur Übertragung der linearen Bewegung des Kolbens 16 in eine Drehbewegung der Gurtwelle 12 ist ein Metallband 18 angeordnet, welches mit seinem einen Ende 19 an dem Straffergehäuse 25 befestigt ist und sich quer über den Bewegungsweg des Kolbens 16 in dem Kolbenraum 17 zu dem Fortsatz 13 der Gurtwelle 12 erstreckt. Hier ist das Metallband 18 in mehreren Windungen um den Fortsatz 13 der Gurtwelle 12 geschlungen und bildet somit einen Wickelvorrat 20 aus, der in der in Figur 1 dargestellten Funktionsstellung vor Auslösung des Strafferantriebes 14 einen Abstand 21 zum Fortsatz 13 der Gurtwelle 12 ausbildet, so dass der Wickelvorrat 20 die normale Drehbewegung der Gurtwelle 12 mit Fortsatz 13 während des Funktionsbetriebes des Gurtaufrollers nicht stört. In dieser den Abstand 21 einhaltenden Lage ist der Wickelvorrat 20 durch ein als Stift ausgebildetes und den Wickelvorrat 20 radial durchgreifendes Halteelement 22 gesichert. Weiterhin ist in dem Straffergehäuse 25 eine Ausnehmung 24 ausgebildet, die den Wickelvorrat 20 teilweise in sich aufnimmt und so für eine Abstützung des Wickelvorrats 20 in dessen Ruhezustand sorgt.

Kommt es zur Auslösung des Strafferantriebes 14, so treiben die von der pyrotechnischen Treibladung 15 freigesetzten Gase den Kolben 16 an und verschieben diesen linear im Kolbenraum 17. Dabei beaufschlagt der Kolben 16 das Metallband 18 und zieht dieses dabei von dem Wickelvorrat 20 ab. Aufgrund dieser eintretenden Zugbelastung legen sich die Windungen des Wickelvorrats 20 an Metallband 18 eng um den Fortsatz 13 der Gurtwelle 12, so dass aufgrund des damit eintretenden Kraftschlusses bei fortgesetztem Abzug des Metallbandes 18 von dem Wickelvorrat 20 die Gurtwelle 12 in Drehung versetzt wird. Damit das Halteelement 22 diesen Abwickelvorgang nicht stört, ist das Halteelement in einer nicht dargestellten Weise mit einer Sollbruchstelle versehen und schert bei auftretender Zugbelastung ab.

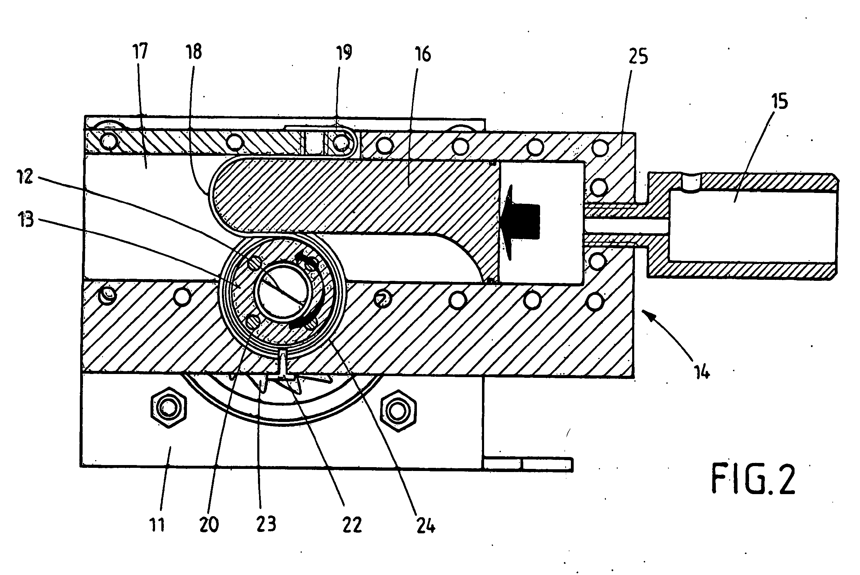

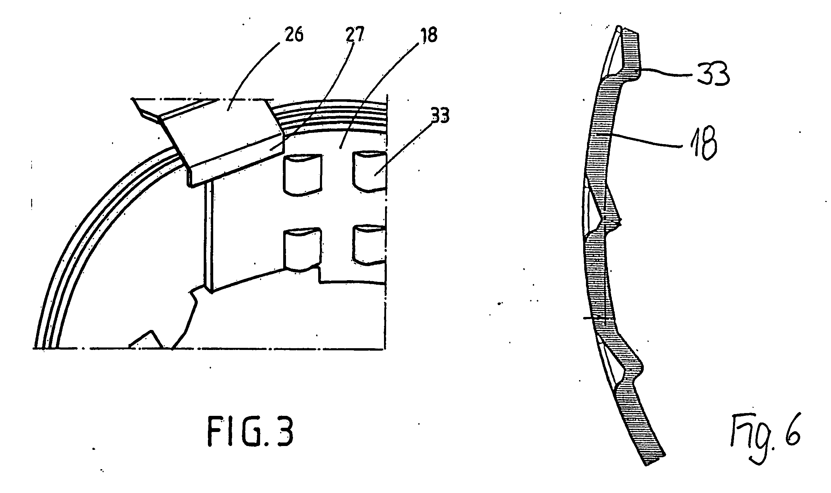

In Figur 3 ist eine alternative Ausführungsform hinsichtlich des in den Figuren 1 und 2 dargestellten Halters 22 für den Wickelvorrat 20 dargestellt. Bei dem aus Figur 3 ersichtlichen Ausführungsbeispiel besteht dieser Halter aus einer den Wickelvorrat 20 des Metallbandes 18 an dessen äußeren Umfang einfassenden und mit einem hakenförmigen Vorsprung 27 übergreifenden Klammer 26, wobei die Klammer 26 eine Sollbruchstelle aufweist, so dass sie bei Auslösung des Strafferantriebs den Wickelvorrat 20 freigibt. In einer nicht weiter dargestellten Ergänzung kann vorgesehen sein, dass auf der der in Figur 3 dargestellten Klammer 26 gegenüberliegenden Seite in einer symmetrischen Anordnung eine zweite Klammer 26 vorgesehen ist, so dass der Wickelvorrat 20 beidseitig festgelegt beziehungsweise gehalten ist. Hierbei ist auch möglich, die der in Figur 3 dargestellten Klammer 26 gegenüberliegende weitere Klammer als einen Gehäusevorsprung auszubilden, in den der Wickelvorrat 20 entsprechend eingelegt wird.

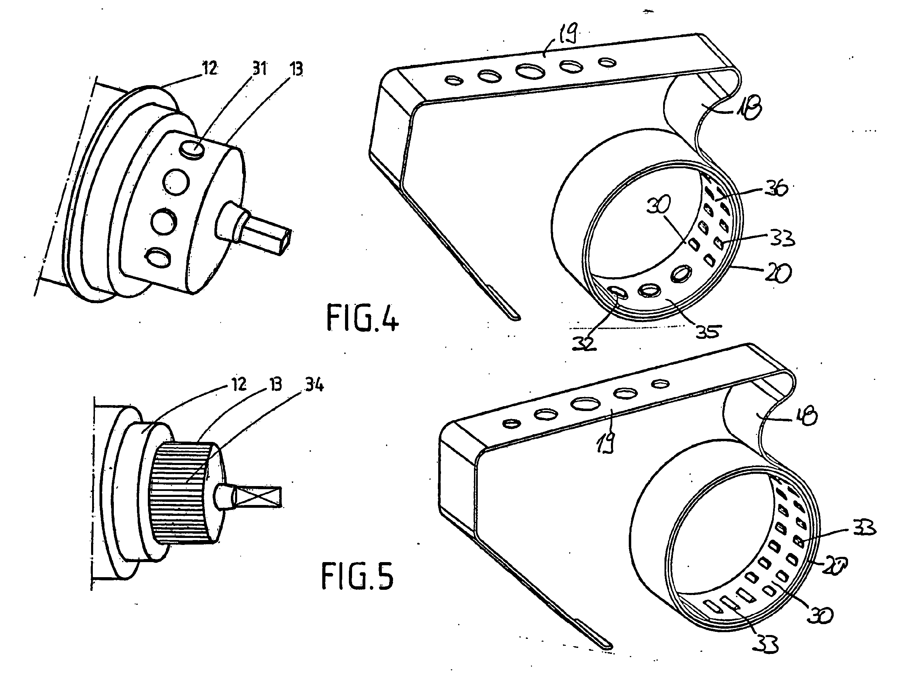

In den Figuren 4 und 5 sind alternative Ausführungsbeispiele für eine formschlüssige Anbindung des Wickelvorrats 20 an den Fortsatz 13 der Gurtwelle 12 dargestellt. Wie sich dazu zunächst aus Figur 4 ergibt, ist die äußere Oberfläche des Fortsatzes 13 der Gurtwelle 12 auf seinem Umfang mit stiftartigen Vorsprüngen 31 versehen. Dementsprechend sind in demjenigen Endabschnitt 30 des Wickelvorrats 20, der sich bei Auslösung des Strafferantriebs um den Fortsatz 13 legt, Ausnehmungen 32 ausgebildet, die mit den stiftartigen Vorsprüngen 31 in Eingriff kommen. Damit nicht über den gesamten Längenabschnitt des Endabschnitts 30 durch die Ausnehmungen 32 eine Schwächung des Metallbandes 18 herbeigeführt wird, sind die Ausnehmungen 32 nur in einem an das Ende des Metallbandes 18 anschließenden ersten Bereich 35 ausgebildet, wobei in dem daran noch anschließenden Bereich 36 des Metallbandes aus der Oberfläche des Metallbandes herausgehobene Erhebungen 33 angeordnet sind, die sich ebenfalls mit den stiftartigen Vorsprüngen 31 verhaken.

Alternativ kann gemäß Figur 5 vorgesehen sein, dass der Fortsatz 13 der Gurtwelle 12 über seinen Umfang mit einer quer zur Umschlingungsrichtung des Metallbandes 18 verlaufenden, aus einzelnen Auswerfungen bestehenden Riffelung 34 versehen ist, wobei der den Fortsatz 13 der Gurtwelle 12 bei Auslösung des Strafferantriebes umschlingende Endabschnitt 30 des Metallbandes 18 mit Erhebungen 33 versehen ist, die den zu Figur 4 beschriebenen Erhebungen entsprechen. Wie dabei noch aus Figur 6 ersichtlich ist es vorteilhaft, wenn die Erhebungen 33 eine in die Drehrichtung des Wickelvorrats 20 bei Auslösung des Strafferantriebes geneigte Ausstellung aufweisen.

Wie nicht weiter dargestellt, kann auch die Ausbildung des Endabschnitts 30 gemäß Figur 4 mit einem mit Riffelung 34 versehenen Fortsatz 13 der Gurtwelle 12 zusammenwirken, soweit die Ausnehmungen 32 mit in Richtung des Fortsatzes 13 hervorstehenden Umfangsrändern ausgebildet sind, so dass sich diese Umfangsränder ebenfalls mit der Riffelung verhaken.

## Patentansprüche

1. Gurtstraffer (10) für Kraftfahrzeuge mit einer in einem Gehäuse (11) drehbar gelagerten Gurtwelle (12) als Träger eines darauf gewickelten Gurtbandes und mit einem daran über ein Metallband (18) gekoppelten Strafferantrieb (14), der bei Auslösung durch Einwirkung auf das Metallband (18) und dessen Bewegung die Gurtwelle (12) antreibt und in Drehung versetzt, wobei das Metallband (18) vor Auslösung des Strafferantriebs (14) in wenigstens einer als Wickelvorrat (20) für dessen Bewegung dienenden Windung um den auf seinem Umfang mit reibungserhöhenden Gestaltungen (31, 34) versehenen Fortsatz (13) der Gurtwelle (12) geschlungen ist, **dadurch gekennzeichnet, dass** sich aufgrund der bei Auslösung des Strafferantriebs (14) eintretenden Zugbelastung die Windungen des Wickelvorrat (20) an Metallband (18) eng um den Fortsatz (13) der Gurtwelle (12) legen und zur Ankopplung des Metallbandes (18) an den Fortsatz (13) zu dessen Drehung der im Inneren des Wickelvorrats (20) gelegene und bei Auslösung des Strafferantriebs (14) in Kontakt mit der Gurtwelle (12) kommende Endabschnitt (30) des Metallbandes (18) mit den an dem Fortsatz (13) ausgebildeten Gestaltungen (31, 34) in Eingriff gelangenden Gestaltungen (32, 33) versehen ist.

2. Gurtstraffer nach Anspruch 1, **dadurch gekennzeichnet, dass** der Fortsatz (13) der Gurtwelle (12) auf wenigstens einem Teil seines Umfangs mit stiftartigen Vorsprüngen (31) versehen ist, denen in den Endabschnitt (30) des Metallbandes (18) eingebrachte Ausnehmungen (32) zugeordnet sind.

3. Gurtstraffer nach Anspruch 2, **dadurch gekennzeichnet, dass** die Ausnehmungen (32) in einem an das Ende des Metallbandes (18) anschlie-βenden Bereich (35) der Erstreckung des Endabschnitts (30) ausgebildet und ein daran anschließender Bereich (36) des Endabschnitts (30) mit in Richtung des umschlungenen Fortsatzes (13) der Gurtwelle (12) aus der Oberfläche des Metallbandes (18) herausgehobenen Erhebungen (33) versehen ist.

4. Gurtstraffer nach Anspruch 1 oder 2, **dadurch gekennzeichnet, dass** der Fortsatz (13) der Gurtwelle (12) über seinen Umfang mit einer quer zur Umschlingungsrichtung des Metallbandes (18) verlaufenden, aus einseitigen Aufwerfungen bestehenden Riffelung (34) versehen ist und der Endabschnitt (30) des Metallbandes (18) mit in Richtung des umschlungenen Fortsatzes (13) der Gurtwelle (12) aus der Oberfläche des Metallbandes (18) herausgehobenen Erhebungen (33) versehen ist.

5. Gurtstraffer nach Anspruch 2 oder 4, **dadurch gekennzeichnet, dass** die in dem Bereich (35) des Endabschnitts (30) des Metallbandes (18) ausgebildeten Ausnehmungen (32) mit in Richtung des umschlungenen Fortsatzes (13) der Gurtwelle (12) hervorstehenden Umfangsrändern ausgebildet sind.

6. Gurtstraffer nach Anspruch 3 oder 4, **dadurch gekennzeichnet, dass** die aus der Oberfläche des Metallbandes (18) herausgehobenen Erhebungen (33) mit einer in die Drehrichtung des Wickelvorrats (20) bei Auslösung des Strafferantriebs geneigten Ausstellung ausgebildet sind.

7. Gurtstraffer nach einem der Ansprüche 1 bis 6, **dadurch gekennzeichnet, dass** der Strafferantrieb (14) als Linearstraffer mit einem linear beweglichen und auf das Metallband (18) einwirkenden Kolben (16) ausgebildet ist.

8. Gurtstraffer nach Anspruch 7, **dadurch gekennzeichnet, dass** das von dem Wickelvorrat (20) an Metallband (18) wegführende freie Ende (19) des Metallbandes (18) durch den Bewegungsweg des Kolbens (16) geführt und an einem gehäusefesten Teil (11) befestigt ist.

## Claims

1. Seat belt tensioner (10) for motor vehicles, having a belt shaft (12) rotatably supported in a housing (11) as a carrier of a seat belt wound thereon and with a tightening drive (14) coupled thereto by a metal band (18), said drive driving the belt shaft (12) and putting it in rotation when triggered by action on the metal band (18) and the movement thereof, wherein the metal band (18), before triggering the tightening drive (14), surrounds, in at least one winding serving as a winding supply (20) for the movement thereof, the extension (13) of the belt shaft (12) having friction-enhancing configurations (31, 34) over its circumference, **characterised in that**, due to the tensile stress which occurs when triggering the tightening drive (14), the windings of the winding supply (20) of metal band (18) are tight around the extension (13) of the belt shaft (12) and, for coupling the metal band (18) to the extension (13), for the rotation thereof, the end portion (30) of the metal band (18) located inside the winding supply (20) and, when triggering the tightening drive (14), coming into contact with the belt shaft (12) is provided with configurations (32, 33) engaging the configurations (31, 34) formed at the extension (13).

2. Seat belt tensioner according to claim 1, **characterised in that** the extension (13) of the belt shaft (12) is provided with pin-like projections (31) on at least a part of its circumference, said projections being allocated to recesses (32) introduced into the end portion (30) of the metal band (18).

3. Seat belt tensioner according to claim 2, **characterised in that** the recesses (32) are formed in an area (35) of the extension of the end portion (30) linked to the end of the metal band (18) and an area (36) of the end portion (30) linked thereto is provided, in the direction of the surrounding extension (13) of the belt shaft (12), with elevations (33) raised from the surface of the metal band (18).

4. Seat belt tensioner according to claim 1 or 2, **characterised in that** the extension (13) of the belt shaft (12), over its circumference, is provided with a fluting (34) running transversally to the wrap-around direction of the metal band (18) and consisting of unilateral elevations and the end portion (30) of the metal band (18) is provided, in the direction of the surrounding extension (13) of the belt shaft (12), with elevations (33) raised from the surface of the metal band (18).

5. Seat belt tensioner according to claim 2 or 4, **characterised in that** the recesses (32) formed in the area (35) of the end portion (30) of the metal band (18) are formed, in the direction of the surrounding extension (13) of the belt shaft (12), with projecting peripheral edges.

6. Seat belt tensioner according to claim 3 or 4, **characterised in that** the elevations (33) raised from the surface of the metal band (18) are formed with a position which is inclined, when triggering the tightening drive, in the direction of rotation of the winding supply (20).

7. Seat belt tensioner according to one of the claims 1 to 6, **characterised in that** the tightening drive (14) is designed as a linear tightener with a piston (16) having linear movement and acting on the metal band (18).

8. Seat belt tensioner according to claim 7, **characterised in that** the free end (19) of the metal band (18) leading away from the winding supply (20) of metal band (18) is guided by the movement path of the piston (16) and attached to a part (11) fixed to the housing.

## Revendications

1. Tendeur de ceinture (10) pour des véhicules automobiles avec un arbre de ceinture (12) logé de manière à pouvoir tourner dans un boîtier (11), servant de support à une bande de ceinture enroulée sur celui-ci et avec un mécanisme d'entraînement de tendeur (14) couplé à celui-ci par le biais d'une bande métallique (18), lequel mécanisme d'entraînement entraîne et met en rotation l'arbre de ceinture (12) lors du déclenchement en agissant sur la bande métallique (18) et par son mouvement, la bande métallique (18) étant enroulée, avant le déclenchement du mécanisme d'entraînement de tendeur (14) dans au moins un enroulement servant de réserve de bobinage (20) pour son mouvement, autour du prolongement (13) de l'arbre de ceinture (12) pourvu sur sa périphérie de formations (31, 34) augmentant le frottement, **caractérisé en ce qu'**en raison de la charge de traction survenant lors du déclenchement du mécanisme d'entraînement de tendeur (14), les enroulements de réserve de bobinage (20) se posent étroitement sur la bande métallique (18) autour du prolongement (13) de l'arbre de ceinture (12) et pour le couplage de la bande métallique (18) au prolongement (13) pour sa rotation, la section d'extrémité (30) de la bande métallique (18) venant en contact lors du déclenchement du mécanisme d'entraînement de tendeur (14) avec l'arbre de ceinture (12) et placée à l'intérieur de la réserve de bobinage (20) est pourvue de formations (32, 33) parvenant en engagement avec les formations (31, 34) réalisées sur le prolongement (13).

2. Tendeur de ceinture selon la revendication 1, **caractérisé en ce que** le prolongement (13) de l'arbre de ceinture (12) est pourvu, sur au moins une partie de sa périphérie, de saillies (31) de type goupille, auxquelles sont associés des évidements (32) introduits dans la section d'extrémité (30) de la bande métallique (18).

3. Tendeur de ceinture selon la revendication 2, **caractérisé en ce que** les évidements (32) sont réalisés dans une zone (35) contiguë à l'extrémité de la bande métallique (18) de l'étendue de la section d'extrémité (30) et une zone contiguë (36) de la section d'extrémité (30) est pourvue d'élévations (33) dégagées de la surface de la bande métallique (18) en direction du prolongement (13) enroulé de l'arbre de ceinture (12).

4. Tendeur de ceinture selon la revendication 1 ou 2, **caractérisé en ce que** le prolongement (13) de l'arbre de ceinture (12) est pourvu sur sa périphérie d'une cannelure (34) se composant de projections unilatérales, s'étendant transversalement au sens d'enroulement de la bande métallique (18) et la section d'extrémité (30) de la bande métallique (18) est pourvue d'élévations (33) dégagées de la surface de la bande métallique (18) en direction du prolongement (13) enroulé de l'arbre de ceinture (12).

5. Tendeur de ceinture selon la revendication 2 ou 4, **caractérisé en ce que** les évidements (32) pratiqués dans la zone (35) de la section d'extrémité (30) de la bande métallique (18) sont réalisés avec des bords périphériques dépassant en direction du prolongement (13) enroulé de l'arbre de ceinture (12).

6. Tendeur de ceinture selon la revendication 3 ou 4, **caractérisé en ce que** les élévations (33) dégagées de la surface de la bande métallique (18) sont réalisées avec une exposition inclinée dans le sens de rotation de la réserve de bobinage (20) lors du déclenchement du mécanisme d'entraînement de tendeur.

7. Tendeur de ceinture selon l'une quelconque des revendications 1 à 6, **caractérisé en ce que** l'mécanisme d'entraînement de tendeur (14) est réalisé comme un tendeur linéaire avec un piston (16) mobile linéairement et agissant sur la bande métallique (18).

8. Tendeur de ceinture selon la revendication 7, **caractérisé en ce que** l'extrémité libre (19) de la bande métallique (18) s'éloignant de la réserve de bobinage (20) sur la bande métallique (18) est guidée par la course de déplacement du piston (16) et est fixée sur une partie fixée au boîtier (11).
